# EUROPÄISCHE PATENTANMELDUNG

(11) **EP 4 741 223 A1**
(43) Veröffentlichungstag der Anmeldung: **13.05.2026**
(21) Anmeldenummer: 24212239.8
(22) Anmeldetag: 11.11.2024
(51) Int. Cl.: B60N 2/02, B60N 2/06, F16H 57/03, F16H 57/039

(54) **GEHÄUSE FÜR EIN SPINDELGETRIEBE SOWIE SPINDELGETRIEBE**

(71) Anmelder: IMS Gear SE & Co. KGaA, 78166 Donaueschingen (DE)
(72) Erfinder: Fuchs, Gabriel, 78086 Brigachtal (DE); Rettenmeier, Patrick, 78126 Königsfeld (DE); Weinert, Johannes, 78054 Villingen-Schwenningen (DE); Hengstler, Manuel, 78112 St. Georgen (DE)
(74) Vertreter: Westphal, Mussgnug & Partner Patentanwälte mbB

(57) **Zusammenfassung**

Gehäuse (32) für ein Spindelgetriebe (14), mit
• einer Spindelachse (34),
• zwei Mutterlagersitzen (48) zur Anordnung jeweils eines Spindelmutterlagers (50),
• zwei einander gegenüberliegenden und jeweils die Spindelachse (34) schneidenden Stirnwandungen (52),
• mindestens einer entlang der Spindelachse (34) ausgerichteten Seitenwandung (60), und
• einer windschief zu der Spindelachse (34) angeordneten Schneckenachse (36),
wobei die Spindelachse (34) in einer parallel zu der Schneckenachse (36) angeordneten gedachten Spindelebene (62) angeordnet ist, und die mindestens eine Seitenwandung (60) mindestens eine Rippe (68, 74, 80, 94) zur Versteifung des Gehäuses (32) aufweist, sowie
Spindelgetriebe (14) mit einem Gehäuse (32).

## Beschreibung

Die Erfindung betrifft ein Gehäuse für ein Spindelgetriebe sowie ein Spindelgetriebe.

Zur elektromotorischen Verstellung von Sitzen in der Längsrichtung eines Kraftfahrzeugs werden häufig Sitzlängsverstellvorrichtungen eingesetzt. Die Sitzlängsverstellvorrichtungen weisen meist ein Spindelgetriebe auf, mittels dessen Drehzahl und Drehmoment zwischen einer Getriebeschnecke und einer Getriebespindel übertragen werden. Dafür ist auf der Getriebespindel eine Spindelmutter angeordnet, die ihrerseits wiederum einen Zahnkranz mit einer Außenverzahnung aufweist, der mit der Getriebeschnecke im Eingriff steht. Derartige Spindelgetriebe sind beispielsweise aus der EP 1 992 842 B1, der DE 103 62 040 B4 oder der KR 10 1 920 222 B1 bekannt.

Wie insbesondere aus den beiden Dokumenten EP 1 992 842 B1 und DE 103 62 040 B4 ersichtlich ist, können die Spindelgetriebe zum Einsatz in einer Sitzlängsverstellvorrichtung in einem U-förmigen Getriebehalter angeordnet werden. Der Getriebehalter kann wiederum mit dem zu verstellenden Sitz gekoppelt sein.

Werden die Spindelgetriebe zur Sitzlängsverstellung in Fahrtrichtung eines Kraftfahrzeugs eingesetzt, ist das Spindelgetriebe insbesondere im Fall eines Frontalaufpralls des Fahrzeugs hohen Kräften ausgesetzt. Ein für die Auslegung derartiger Spindelgetriebe sehr relevanter Lastfall ist daher der sogenannte Crashfall. Dabei wird die Annahme zugrunde gelegt, dass die mit der Spindelmutter im Eingriff stehende Spindel steht, während an dem Getriebehalter eine definierte Kraft in der Bewegungsrichtung des Sitzes angreift. Ziel ist es dabei, das Spindelgetriebe so zu designen, dass insbesondere im oben beschrieben Fall eines Frontalaufpralls der Sitz möglichst lange möglichst weit zurückgehalten wird. Das Spindelgetriebe soll so einer Vorverlagerung des Sitzes möglichst effektiv entgegenwirken. Das möglichst lange Zurückhalten des Sitzes ist insbesondere erforderlich, damit im Crashfall genügend Zeit zum Entfalten eines Airbags besteht. Bekannte Spindelgetriebe erfüllen diese Anforderung oft nicht im gewünschten Maß, insbesondere da im Crashfall das Getriebegehäuse vorzeitig aufbricht.

Der Erfindung liegt die Aufgabe zugrunde, eine Anordnung bereitzustellen, mittels derer ein Spindelgetriebe im Crashfall einer Vorverlagerung des Sitzes möglichst effektiv entgegenwirken kann.

Die Aufgabe wird erfindungsgemäß gelöst durch ein Gehäuse für ein Spindelgetriebe mit den Merkmalen des Patentanspruchs 1, ein Spindelgetriebe mit den Merkmalen des Patentanspruchs 13 sowie ein Spindelgetriebe mit den Merkmalen des Patentanspruchs 14.

Vorteilhafte Ausgestaltungen und Weiterbildungen der Erfindung sind in den abhängigen Ansprüchen angegeben.

Ein erfindungsgemäßes Gehäuse für ein Spindelgetriebe, umfasst eine Spindelachse, zwei um die Spindelachse angeordnete Mutterlagersitze zur Anordnung jeweils eines Spindelmutterlagers, und zwei einander gegenüberliegende und jeweils die Spindelachse schneidenden Stirnwandungen. Jede der Stirnwandungen ist bevorzugt zumindest abschnittsweise senkrecht zu der Spindelachse angeordnet.

Das Gehäuse umfasst darüber hinaus mindestens eine entlang der Spindelachse ausgerichtete Seitenwandung. Vorzugsweise ist die mindestens eine Seitenwandung parallel zu der Spindelachse angeordnet. Das Gehäuse umfasst ferner eine windschief zu der Spindelachse angeordneten Schneckenachse, wobei die Spindelachse in einer parallel zu der Schneckenachse angeordneten gedachten Spindelebene angeordnet ist. Sofern nicht anders angegeben drückt der Begriff "windschief" hier und im Folgenden vorzugsweise aus, dass die betreffenden Achsen sich weder schneiden noch parallel zueinander angeordnet sind. Vorzugsweise sind die Spindelachse und die Schneckenachse rechtwinklig zueinander angeordnet.

Jeder der Mutterlagersitze ist einer der Stirnwandungen zugeordnet. So kann der jeweilige der Mutterlagersitze näher an einer der Stirnwandungen angeordnet sein als der anderen der Stirnwandungen. Vorzugsweise ist jeder der Mutterlagersitze angrenzend an jeweils eine der Stirnwandungen angeordnet. Besonders bevorzugt grenzt der jeweilige der Mutterlagersitze an eine Innenseite der entsprechenden der Stirnwandungen an. Jede der Stirnwandungen weist darüber hinaus einen Abstützabschnitt zur Abstützung des Gehäuses an einem Getriebehalter auf.

Das Gehäuse kann ferner mindestens einen um die Schneckenachse angeordneten Schneckenlagersitz zur Anordnung eines Schneckenlagers umfassen. Die mindestens eine Seitenwandung weist mindestens eine Rippe zur Versteifung des Gehäuses auf. Dadurch kann einer Verformung des Gehäuses im Crashfall entgegengewirkt werden. Die mindestens eine Rippe kann integral mit dem Gehäuse ausgebildet sein.

In einer Ausführungsform der Erfindung kann das Gehäuse geteilt ausgebildet sein, derart dass das Gehäuse ein separates erstes Gehäuseteil und ein separates zweites Gehäuseteil aufweist, wobei das erste Gehäuseteil und das zweite Gehäuseteil vorzugsweise form- und/oder stoffschlüssig miteinander verbunden sind. Insbesondere kann das Gehäuse entlang der Spindelachse geteilt sein. Mittels der mindestens einen Rippe kann insbesondere einem Auseinanderspreizen der beiden Gehäuseteil im Crashfall entgegengewirkt werden.

Vorzugsweise ist mindestens eine außenseitige Rippe der mindestens einen Rippe, vorzugsweise ausschließlich, an einer Außenseite der Seitenwandung angeordnet. Sofern nicht anders angegeben wird als Außenseite hier und im Folgenden vorzugsweise eine Seite einer Wandung bezeichnet, die einer Umgebung des Gehäuses zugewandt ist. In entsprechender Weise bezeichnet eine Innenseite hier und im Folgenden vorzugsweise eine Seite einer Wandung, die einem von dem Gehäuse umschlossenen Innenraum zugewandt ist.

Die mindestens eine außenseitige Rippe kann bezüglich der Spindelebene, vorzugsweise ausschließlich, seitens der Schneckenachse angeordnet sein. Aus Sicht der Schneckenachse kann die mindestens eine außenseitige Rippe, vorzugsweise ausschließlich, diesseits der Spindelebene angeordnet sein.

Vorzugsweise ist mindestens eine erste Rippe der mindestens einen außenseitigen Rippe von dem Abstützabschnitt einer der Stirnwandungen zu dem der gegenüberliegenden der Stirnwandungen zugeordneten der Mutterlagersitze orientiert. Wird das Gehäuse mittels des Abstützabschnitts an dem Getriebehalter abgestützt, erfolgt die Krafteinleitung in das Gehäuse vorzugsweise über den Abstützabschnitt. Die Ausrichtung der mindestens einen ersten Rippe orientiert sich vorzugsweise an der Richtung einer dieser Krafteinleitung entsprechenden Kraftflusses. Jeder der Mutterlagersitze kann einen Radialsitzabschnitt und einen Axialsitzabschnitt aufweisen. Vorzugsweise ist die mindestens eine erste Rippe von dem Abstützabschnitt einer der Stirnwandungen zu dem Axialabschnitt des gegenüberliegenden der Stirnwandungen zugeordneten Mutterlagersitzes orientiert. Die mindestens eine erste Rippe kann so das Gehäuse im Bereich des Kraftflusses von dem Abstützabschnitt zu dem gegenüberliegend angeordneten Axialsitzabschnitt verstärken. Ein erstes Rippenende der mindestens einen ersten Rippe kann an dem Abstützabschnitt einer der Stirnwandungen angeordnet sein. Vorzugsweise ist der Abstützabschnitt insbesondere im Crashfall zur Abstützung des Gehäuses an einem Getriebehalter vorgesehen. Die mindestens eine erste Rippe ist vorzugsweise in einem ersten Rippenwinkel zu dem Abstützabschnitt angeordnet. Der erste Rippenwinkel beträgt bevorzugt 50° bis 100°, besonders bevorzugt 60° bis 90° und am bevorzugtesten ca. 70°. Die mindestens eine erste Rippe kann einen gebogenen Verlauf aufweisen.

Mindestens eine zweite Rippe der mindestens einen außenseitigen Rippe kann von der Schneckenachse zu einem der Mutterlagersitze hin orientiert sein. Vorzugsweise ist die mindestens eine zweite Rippe derart zu einem der Mutterlagersitze hin orientiert, dass die mindestens eine zweite Rippe auf eine einem der Mutterlagersitze entsprechende Position an der Außenseite der mindestens einen Seitenwandung ausgerichtet ist. Die mindestens eine erste Rippe und die mindestens eine zweite Rippe sind vorzugsweise in einem zweiten Rippenwinkel zueinander angeordnet. Der zweite Rippenwinkel beträgt bevorzugt 30° bis 150°, besonders bevorzugt 70° bis 110° und am bevorzugtesten ca. 90°. Die in dem zweiten Rippenwinkel zueinander angeordneten mindestens eine erste Rippe und mindestens eine zweite Rippe sind vorzugsweise aneinander angrenzend angeordnet. Vorzugsweise ist die mindestens eine zweite Rippe derart angeordnet, dass sie eine Kraft aufnimmt, deren Vorzeichen der in der mindestens einen ersten Rippe wirkenden Kraft entgegengesetzt ist. Wirkt in der mindestens einen ersten Rippe eine Druckkraft, nimmt die mindestens eine zweite Rippe vorzugsweise eine Zugkraft auf und umgekehrt. Ein zweites Ende der ersten Rippe kann an der zweiten Rippe angeordnet sein.

Eine dritte Rippe der mindestens einen außenseitigen Rippe kann die Schneckenachse zumindest teilweise umgeben, vorzugsweise in einer Umfangsrichtung um die Schneckenachse. Vorzugsweise kann die dritte Rippe den Schneckenlagersitz zumindest teilweise umgeben. Die dritte Rippe kann, zumindest abschnittsweise, kreisförmig um die Schneckenachse bzw. den Schneckenlagersitz angeordnet sein. Die dritte Rippe kann damit vorzugsweise eine über den Schneckenlagersitz in das Gehäuse eingeleitete Kraft aufnehmen. Ein erstes Ende der mindestens einen zweiten Rippe kann angrenzend an die dritte Rippe angeordnet sein.

Die mindestens eine erste Rippe kann tangential zu der dritten Rippe angeordnet sein.

In einer Weiterbildung der Erfindung weist jede der Stirnwandungen einen Durchführungsabschnitt mit einer um die Spindelachse angeordneten Öffnung zur Durchführung einer Spindel auf, wobei der Abstützabschnitt von dem Durchführungsabschnitt verschieden ausgebildet und gegenüber dem Durchführungsabschnitt um einen Abstützwinkel zu einem Gehäuseinnern des Gehäuses geneigt ist. Insbesondere im Crashfall können ein Abkippen des Gehäuses gegenüber dem Getriebehalter und/oder eine Verformung des Getriebehalters stattfinden. Durch die geneigte Anordnung kann der Abstützabschnitt für eine vorteilhafte Kraftübertragung insbesondere in einem derartigen Zustand ausgebildet sein. Der Abstützwinkel beträgt bevorzugt 2° bis 15°, besonders bevorzugt 5° bis 10°.

In einer bevorzugten Ausführungsform der Erfindung weist das Gehäuse ein bezüglich der Spindelebene von dem Abstützabschnitt abgewandtes Gehäuseende mit äußeren Gehäuseecken auf, wobei die Gehäuseecken als Vorsprünge ausgebildet sind. Derartige Gehäuseecken können insbesondere einer Abkippung des Gehäuses gegenüber dem Getriebehalter im Crashfall entgegenwirken. Unter einer Ecke wird hier und im Folgenden vorzugsweise eine Anordnung verstanden, bei der zwei Kanten in einem Kantenwinkel von kleiner als 180° aufeinandertreffen. Die Ecke kann derart als Vorsprung ausgebildet sein, dass der Kantenwinkel zwischen mindestens zwei der aufeinandertreffenden Kanten weniger als 90° beträgt. Eine Gehäuseecke bezeichnet hier und im Folgenden vorzugsweise eine außenseitige Ecke des Gehäuses.

In einer Weiterbildung der Erfindung ist mindestens eine innenseitige Rippe der mindestens einen Rippe einerseits an einer Innenseite der mindestens einen Seitenwandung und andererseits an einer Bodenwandung des Gehäuses angeordnet. Vorzugsweise ist die mindestens eine innenseitige Rippe an einer Innenseite der Bodenwandung angeordnet. Die Bodenwandung ist vorzugsweise parallel zu der Spindelebene angeordnet. Die Bodenwandung kann senkrecht zu der mindestens einen Seitenwandung und/oder den Stirnwandungen angeordnet sein.

Das Gehäuse kann zwischen der mindestens einen innenseitigen Rippe und mindestens einem der Mutterlagersitze eine Aussparung aufweisen. So kann der für die Spindelmutter im Gehäuse zur Verfügung stehende Bauraum so ausgestaltet sein, dass insbesondere bei einem Abkippen des Gehäuses gegenüber dem Getriebehalter im Crashfall ein unmittelbarer Kontakt zwischen dem Gehäuse und der Spindelmutter bestmöglich vermieden wird. Dadurch kann insbesondere ein Aufspreizen des Gehäuses bei der Ausbildung des Gehäuses als geteiltes Gehäuse verringert werden. Die Aussparung kann zu einer der Seitenwandungen und/oder zu der Bodenwandung hin orientiert sein.

Die mindestens eine Seitenwandung kann symmetrisch zu einer mit der Schneckenachse zusammenfallenden und senkrecht zu der Spindelachse angeordneten Symmetrieebene ausgebildet sein.

In einer Weiterbildung der Erfindung ist das Gehäuse derart, vorzugsweise entlang der Spindelachse, geteilt ausgebildet, dass das Gehäuse ein separates erstes Gehäuseteil und ein separates zweites Gehäuseteil aufweist. Dabei weist jeder der Mutterlagersitze vorzugsweise einen ersten Mutterlagersitzteil auf, der in dem ersten Gehäuseteil angeordnet ist. Jeder der Mutterlagersitze kann einen zweiten Mutterlagersitzteil aufweisen, der in dem zweiten Gehäuseteil angeordnet sein kann. Vorzugsweise ist eine gedachte Lagerlängsebene parallel zu der mindestens einen Seitenwandung und durch die Spindelachse verlaufend angeordnet, wobei der erste Mutterlagersitzteil im Bereich der Lagerlängsebene mindestens einen Öffnungsabschnitt aufweist, in dem der erste Mutterlagersitzteil sich zum zweiten Gehäuseteil hin radial öffnend ausgebildet ist. Dadurch kann die Montage von in den Mutterlagersitzen angeordneten Spindelmutterlagern vereinfacht werden. Vorzugsweise ist der mindestens eine Öffnungsabschnitt des ersten Mutterlagersitzteils an mindestens einem Schnittpunkt des ersten Mutterlagersitzteils mit der Lagerlängsebene angeordnet. Damit ist der mindestens eine Öffnungsabschnitt derart an dem Gehäuse angeordnet, dass das Gehäuse, insbesondere mit Blick auf den beschriebenen Crashfall, allenfalls in unrelevantem Maße geschwächt wird. So ist der mindestens eine Öffnungsabschnitt vorzugsweise in einem Bereich verhältnismäßig großer Materialstärke angeordnet. Dabei ist der mindestens eine Öffnungsabschnitt vorzugsweise beabstandet zu der mindestens einen Seitenwandung angeordnet.

Der erste Mutterlagersitzteil ist in dem mindestens einen Öffnungsabschnitt vorzugsweise sich derart zu dem zweiten Gehäuseteil hin radial öffnend ausgebildet, dass zwischen dem mindestens einen Öffnungsabschnitt und der Spindelebene ein Öffnungswinkel angeordnet ist. Der Öffnungswinkel beträgt bevorzugt 10° bis 45°, besonders bevorzugt 10° bis 30° und am bevorzugtesten ca. 20°.

Ein erfindungsgemäßes Spindelgetriebe umfasst eine Spindelmutter mit einer Spindelmutterlängsachse, eine Schnecke mit einer Schneckenlängsachse, und ein vorstehend beschriebenes Gehäuse. Dabei ist die Spindelmutter derart in dem Gehäuse angeordnet, dass die Spindelmutterlängsachse mit der Spindelachse des Gehäuses zusammenfällt, und die Schnecke ist derart in dem Gehäuse angeordnet, dass die Schneckenlängsachse mit der Schneckenachse des Gehäuses zusammenfällt.

Das Spindelgetriebe kann mindestens ein jeweils in einem der Mutterlagersitze angeordnetes Spindelmutterlager aufweisen, wobei das mindestens eine Spindelmutterlager mindestens einen entlang des mindestens einen Öffnungsabschnitts verlaufenden Keilabschnitt aufweisen kann. Vorzugsweise ist das Spindelmutterlager um die Spindelachse angeordnet. Der mindestens eine Keilabschnitt ist vorzugsweise zumindest teilweise entlang des mindestens einen Öffnungsabschnitts verlaufend angeordnet. Der mindestens eine Keilabschnitt kann an den mindestens einen Öffnungsabschnitt angrenzend angeordnet sein. Vorzugsweise weist das mindestens eine Spindelmutterlager zwei Keilabschnitte auf, die bezüglich einer Umfangsrichtung des mindestens einen Spindelmutterlagers einander entgegengesetzt angeordnet sind.

Der mindestens eine Keilabschnitt kann eine Anschlagfläche aufweisen, die angrenzend an einen Lageranschlag des zweiten Gehäuseteils angeordnet ist. Die Anschlagfläche und/oder der Lageranschlag können vorzugsweise parallel zu der Lagerlängsebene angeordnet sein. Die Anschlagfläche ist vorzugsweise an einem ersten Keilende des mindestens einen Keilabschnitts angeordnet. Der mindestens eine Keilabschnitt kann ein dem ersten Keilende gegenüberliegendes zweites Keilende aufweisen, das vorzugsweise rampenförmig ausgebildet ist, und besonders bevorzugt tangential an eine Lagerbuchse des Spindelmutterlagers angeformt ist. Das mindestens eine Spindelmutterlager kann in dem jeweiligen der Mutterlagersitze in Umfangsrichtung Spiel aufweisen.

Darüber hinaus wird eine Baugruppe beschrieben, die einen Getriebehalter und ein vorstehend beschriebenes Spindelgetriebe umfasst, wobei der Getriebehalter einen U-förmigen Abschnitt mit zwei einander gegenüberliegenden Schenkeln und einem die beiden Schenkel verbindenden Querstück aufweist, und wobei das Spindelgetriebe zwischen den beiden Schenkeln angeordnet ist. Das Spindelgetriebe ist vorzugsweise derart zwischen den beiden Schenkeln angeordnet, dass die Gehäuseecken zum Querstück hin orientiert sind.

Darüber hinaus wird eine Verstelleinheit, insbesondere eine Sitzlängsverstelleinheit, für ein Kraftfahrzeug beschrieben, die ein zuvor beschriebenes Spindelgetriebe oder eine zuvor beschriebene Baugruppe aufweist.

Ausführungsbeispiele der Erfindung werden anhand der nachfolgenden Figuren erläutert. Es zeigt:
- Figur 1: eine perspektivische Ansicht eines Ausführungsbeispiels einer Baugruppe mit einem Spindelgetriebe und einem Getriebehalter,
- Figur 2: eine erste perspektivische Ansicht des Spindelgetriebes der in Fig. 1 gezeigten Baugruppe,
- Figur 3: eine zweite perspektivische Ansicht des in Fig. 2 gezeigten Spindelgetriebes,
- Figur 4: eine Seitenansicht des in Fig. 2 gezeigten Spindelgetriebes mit eingezeichneter Schnittebene B-B,
- Figur 5: eine perspektivische Ansicht eines ersten Gehäuseteils des in Fig. 2 gezeigten Spindelgetriebes,
- Figur 6: eine perspektivische Ansicht eines zweiten Gehäuseteils des in Fig. 2 gezeigten Spindelgetriebes,
- Figur 7: eine Schnittansicht des in Fig. 2 gezeigten Spindelgetriebes entlang der in Fig. 4 eingezeichneten Schnittebene B-B,
- Figur 8: eine perspektivische Darstellung einer Spindelmutter des in Fig. 2 gezeigten Spindelgetriebes mit Spindelmutterlagern.

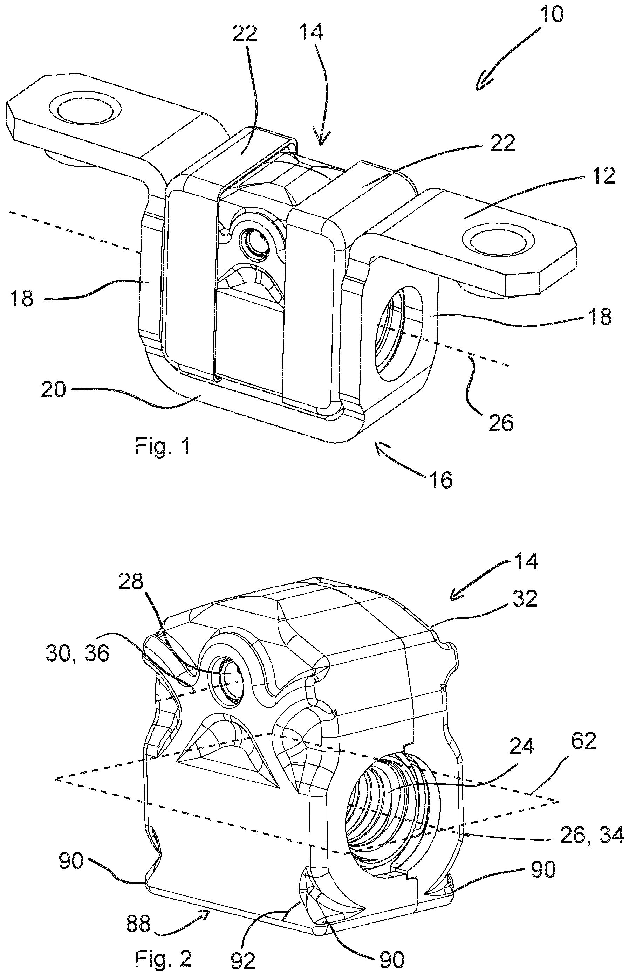

Die Figuren 1 bis 8 zeigen verschiedene Ansichten verschiedener Ausführungsbeispiele. Der Übersichtlichkeit halber werden nicht alle Bezugszeichen in jeder Figur verwendet. Für gleiche und funktionsgleiche Teile werden die gleichen Bezugszeichen verwendet.

Fig. 1 zeigt eine Baugruppe 10 umfassend einen Getriebehalter 12 und ein Spindelgetriebe 14. Der Getriebehalter 12 weist einen U-förmigen Abschnitt 16 mit zwei einander gegenüberliegenden Schenkeln 18 und einem die beiden Schenkel 18 verbindenden Querstück 20 auf. Das Spindelgetriebe 14 ist zwischen den beiden Schenkeln 18 angeordnet. Das Spindelgetriebe 14 ist dabei mittels in zwei Elastomerschalen 22 angeordnet, um einer Geräuschübertragung zwischen dem Spindelgetriebe 14 und dem Getriebehalter 12 entgegenzuwirken.

In den Fig. 2-4 ist das Spindelgetriebe 14 in Alleinstellung gezeigt. Das Spindelgetriebe 14 umfasst eine Spindelmutter 24 mit einer Spindelmutterlängsachse 26, eine mit der Spindelmutter 24 in Eingriff stehende Schnecke 28 mit einer Schneckenlängsachse 30, und ein Gehäuse 32. Dabei ist die Spindelmutter 24 derart in dem Gehäuse 32 angeordnet, dass die Spindelmutterlängsachse 26 mit einer Spindelachse 34 des Gehäuses 32 zusammenfällt. Die Schnecke 28 ist derart in dem Gehäuse 32 angeordnet, dass die Schneckenlängsachse 30 mit einer Schneckenachse 36 des Gehäuses 32 zusammenfällt.

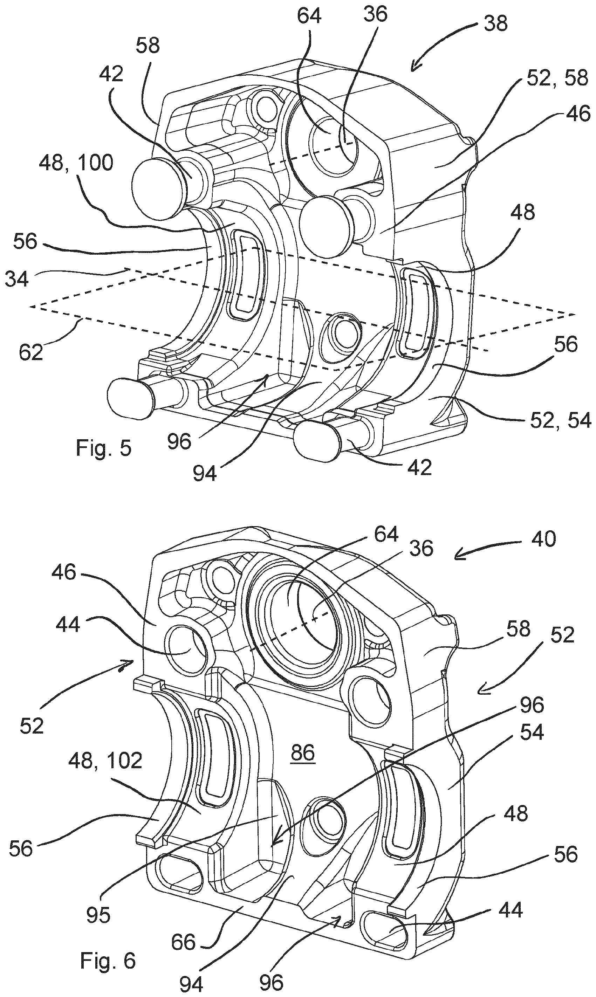

Das Gehäuse 32 ist geteilt ausgebildet, derart dass das Gehäuse 32 ein separates erstes Gehäuseteil 38 (Fig. 5) und ein separates zweites Gehäuseteil 40 (Fig. 6) aufweist. Das erste Gehäuseteil 38 kann Nieten 42 und das zweite Gehäuseteil entsprechende Bohrungen 44 aufweisen, sodass die beiden Gehäuseteile 38, 40 formschlüssig verbindbar sind.

Das Gehäuse 32 umfasst zwei um die Spindelachse 34 angeordnete Mutterlagersitze 48 zur Anordnung jeweils eines Spindelmutterlagers 50, und zwei einander gegenüberliegende und jeweils die Spindelachse 34 schneidende Stirnwandungen 52. Jeder der Mutterlagersitze 48 ist angrenzend an jeweils eine der Stirnwandungen 52 angeordnet und so der entsprechenden Stirnwandung 52 zugeordnet. Jede der Stirnwandungen 52 weist einen Durchführungsabschnitt 54 mit einer um die Spindelachse 34 angeordneten Öffnung 56 zur Durchführung einer Spindel auf. Der Durchführungsabschnitt 54 ist senkrecht zu der Spindelachse 34 angeordnet. Außerdem umfasst jede der Stirnwandungen 52 einen Abstützabschnitt 58 zur Abstützung des Gehäuses 32 an dem Getriebehalter 12.

Das Gehäuse 32 umfasst darüber hinaus zwei entlang der Spindelachse 34 ausgerichtete und einander gegenüberliegend angeordnete Seitenwandungen 60. Vorzugsweise ist jede der Seitenwandungen 60 parallel zu der Spindelachse 34 angeordnet.

Die Fig. 5 veranschaulicht, dass die Schneckenachse 36 und die Spindelachse 34 derart windschief zueinander angeordnet sind, dass sie beabstandet und rechtwinklig zueinander angeordnet sind. Die Spindelachse 34 ist dabei in einer parallel zu der Schneckenachse 36 angeordneten gedachten Spindelebene 62 angeordnet. Das Gehäuse 32 umfasst ferner zwei um die Schneckenachse 36 angeordnete Schneckenlagersitze 64 zur Anordnung eines Schneckenlagers. Das Gehäuse 32 weist außerdem eine Bodenwandung 66 auf, die vorzugsweise parallel zu der Spindelebene 62 angeordnet ist.

Die Fig. 5 u. 6 zeigen, dass das Gehäuse 32 eine Teilungsebene 46 aufweist, in der das Gehäuse 32 entlang der Spindelachse 34 geteilt ist. Die Teilungsebene 46 ist vorzugsweise senkrecht zu der Schneckenachse 36 angeordnet. Außerdem kann die Teilungsebene 46 gegenüber der Spindelachse 34 einen Versatz entlang der Schneckenachse 36 aufweisen. Dementsprechend ist die Spindelachse in Fig. 5 sichtbar, in Fig. 6 hingegen nicht. Damit kann einem Auseinanderspreizen der beiden Gehäuseteile 38, 40 durch eine bezüglich der Spindelachse 34 radial in Richtung der Bodenwandung 66 auf einen der Mutterlagersitze 48 wirkende Kraft entgegengewirkt werden.

Wie insbesondere die Fig. 2-4 zeigen, weist jedes der Gehäuseteile 38, 40 zwei außenseitige erste Rippen 68 auf. Insgesamt umfasst das Gehäuse 32 damit vier erste Rippen 68. Jede der ersten Rippen 68 ist von dem Abstützabschnitt 58 einer der Stirnwandungen 52 zu dem jeweils der gegenüberliegenden der Stirnwandungen 52 zugeordneten der Mutterlagersitz 48 orientiert. Wird das Gehäuse 32 mittels des Abstützabschnitts 58 an dem Getriebehalter 12 abgestützt, erfolgt die Krafteinleitung in das Gehäuse 32 vorzugsweise über den Abstützabschnitt 58. Die Ausrichtung der ersten Rippen 68 orientiert sich vorzugsweise an der Richtung einem dieser Krafteinleitung jeweils entsprechenden Kraftfluss. Vorzugsweise ist der Abstützabschnitt 58 insbesondere im Crashfall zur Abstützung des Gehäuses 32 an einem Getriebehalter 12 vorgesehen.

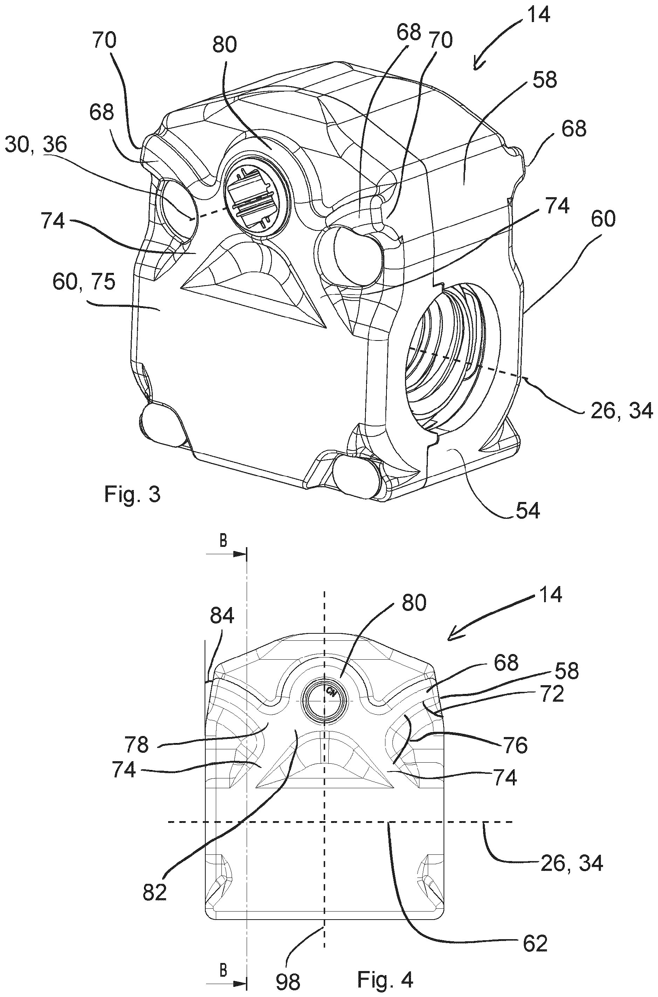

Jede der ersten Rippen 68 weist ein erstes Rippenende 70 auf. Jedes der ersten Rippenenden 70 der ersten Rippen 68 ist an dem Abstützabschnitt 58 einer der Stirnwandungen 52 angeordnet. Jede der ersten Rippen 68 ist jeweils in einem ersten Rippenwinkel 72 zu dem Abstützabschnitt 58 angeordnet (siehe Fig. 4). Der erste Rippenwinkel 72 beträgt vorzugsweise ca. 70°. Jede der ersten Rippen 72 kann einen gebogenen Verlauf aufweisen.

Darüber hinaus weist jedes der Gehäuseteile 38, 40 zwei außenseitige zweite Rippen 74 auf. Jede der zweiten Rippen 74 ist vorzugsweise von der Schneckenachse 36 zu einem der Mutterlagersitze 48 hin orientiert, derart dass jede der zweiten Rippen 74 auf eine einem der Mutterlagersitze 48 entsprechende Position an einer Außenseite 75 der jeweiligen Seitenwandung 60 ausgerichtet ist. Jeweils eine der ersten Rippen 68 und eine der zweiten Rippen 74 sind aneinander angrenzend und in einem zweiten Rippenwinkel 76 zueinander angeordnet. Der zweite Rippenwinkel 76 beträgt vorzugsweise ca. 90°. Anhand der Darstellung in Fig. 4 ist gut vorstellbar, dass bei Einleitung einer Druckkraft in einen der Abstützabschnitte 58, während das Spindelgetriebe 14 fest auf einer entlang der Spindelachse 34 angeordneten Spindel angeordnet ist, die an den diesen Abstützabschnitt 58 angrenzende erste Rippe 68 auf Druck und die wiederum an diese erste Rippe 68 angrenzende zweite Rippe 74 auf Zug belastet wird. Ein zweites Ende 78 der jeweiligen ersten Rippe 68 kann an der jeweils angrenzenden zweiten Rippe 74 angeordnet sein.

Die Fig. 2-4 zeigen weiter, dass jedes der Gehäuseteile 38, 40 eine außenseitige dritte Rippe 80 aufweist. Die dritte Rippe 80 umgibt den jeweiligen Schneckenlagersitz 64 zumindest teilweise in einer Umfangsrichtung um die Schneckenachse 36. Dabei ist die dritte Rippe 80 kreisförmig um die Schneckenachse 36 angeordnet. Jede der zweiten Rippen 74 kann ein erstes Ende 82 aufweisen, das angrenzend an die an dem entsprechenden der Gehäuseteile 38, 40 angeordnete dritte Rippe 80 angeordnet ist. Jede der ersten Rippen 68 kann tangential zu der an dem entsprechenden der Gehäuseteile 38, 40 angeordneten dritten Rippe 80 angeordnet sein.

Die außenseitigen Rippen 68, 74, 80 sind ausschließlich an der Außenseite 75 der jeweiligen Seitenwandung 60 angeordnet. Wie Fig. 4 zeigt, sind die außenseitigen Rippen 68, 74, 80 außerdem bezüglich der Spindelebene 62 ausschließlich seitens der Schneckenachse 36 angeordnet. Die außenseitigen Rippen 68, 74, 80 sind integral mit dem Gehäuse 32 ausgebildet.

Wie Fig. 3 zeigt, ist der Abstützabschnitt 58 der jeweiligen Stirnwandung 52 von dem Durchführungsabschnitt 54 derselben Stirnwandung 52 verschieden ausgebildet. Fig. 4 zeigt, dass dabei der jeweilige Abstützabschnitt 58 gegenüber dem entsprechenden Durchführungsabschnitt 54 jeweils um einen Abstützwinkel 84 zu einem Gehäuseinnern 86 des Gehäuses 32 geneigt. Insbesondere im beschriebenen Crashfall können ein Abkippen des Gehäuses 32 gegenüber dem Getriebehalter 12, insbesondere um eine parallel zu der Schneckenachse 36 angeordneten Drehachse, und/oder eine Verformung des Getriebehalters 12 stattfinden. Durch die geneigte Anordnung kann der jeweilige Abstützabschnitt 58 für eine vorteilhafte Kraftübertragung insbesondere in einem derartigen Zustand ausgebildet sein. Der Abstützwinkel 84 beträgt bevorzugt 5° bis 10°.

Insbesondere Fig. 2 zeigt, dass das Gehäuse 32 ein bezüglich der Spindelebene 62 von den Abstützabschnitten 58 abgewandtes Gehäuseende 88 mit äußeren Gehäuseecken 90 aufweist, wobei die Gehäuseecken 90 als Vorsprünge ausgebildet sind. Derartige Gehäuseecken 90 können insbesondere einem Abkippen des Gehäuses 32 gegenüber dem Getriebehalter 12, insbesondere um eine parallel zu der Schneckenachse 36 angeordneten Drehachse im Crashfall entgegenwirken. Jede der Gehäuseecken 90 weist zumindest einen Kantenwinkel 92 von weniger als 90° auf. Wie Fig. 1 zeigt, ist das Spindelgetriebe 14 derart zwischen den beiden Schenkeln 18 angeordnet, dass die Gehäuseecken 90 zum Querstück 20 hin orientiert sind.

Die Fig. 5 u. 6 zeigen, dass das Gehäuse 32 eine innenseitige Rippe 94 aufweist, die einerseits an einer Innenseite 95 jeder der Seitenwandungen 60 und andererseits an einer Innenseite der Bodenwandung 66 des Gehäuses 32 angeordnet ist. Das Gehäuse 32 weist zwischen der innenseitigen Rippe 94 und jedem der Mutterlagersitze 48 jeweils eine Aussparung 96 auf. So kann der für die Spindelmutter 24 im Gehäuse 32 zur Verfügung stehende Bauraum so ausgestaltet sein, dass insbesondere bei dem zuvor beschriebenen Abkippen des Gehäuses 32 gegenüber dem Getriebehalter 12 im Crashfall ein unmittelbarer Kontakt zwischen dem Gehäuse 32 und der Spindelmutter 24 im Bereich der Bodenwandung 66 und damit ein Aufspreizen des Gehäuses 32 durch Auseinandertreiben der Gehäuseteile 38, 40 bestmöglich vermieden wird. Die Aussparung 96 ist zu einer der Seitenwandungen 60 und/oder zu der Bodenwandung 66 hin orientiert. Die innenseitige Rippe 94 ist integral mit dem Gehäuse 32 ausgebildet.

Wie Fig. 4 veranschaulicht, ist jede der Seitenwandungen 60 symmetrisch zu einer mit der Schneckenachse 36 zusammenfallenden und senkrecht zu der Spindelachse 34 angeordneten Symmetrieebene 98 ausgebildet.

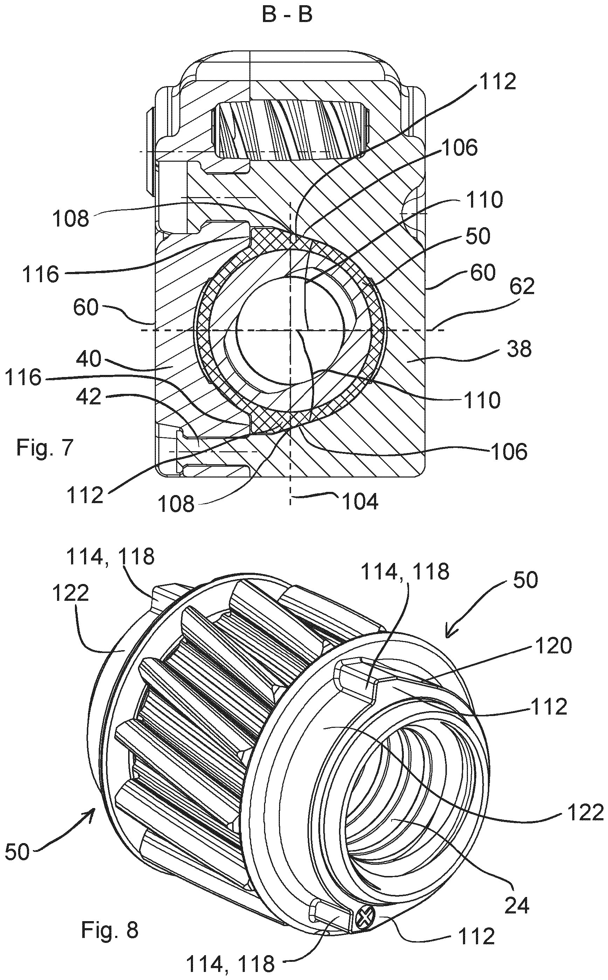

Fig. 5 u. 6 zeigen, dass dadurch, dass das Gehäuse 32 geteilt ausgebildet ist, jeder der Mutterlagersitze 48 einen ersten Mutterlagersitzteil 100 aufweist, der in dem ersten Gehäuseteil 38 angeordnet ist, und jeder der Mutterlagersitze 48 einen zweiten Mutterlagersitzteil 102 aufweist, der in dem zweiten Gehäuseteil 40 angeordnet ist. Eine gedachte Lagerlängsebene 104 ist in der Schnittansicht der Fig. 7 eingezeichnet.

Die Lagerlängsebene 104 ist parallel zu den Seitenwandungen 60 und durch die Spindelachse 34 verlaufend angeordnet, wobei der erste Mutterlagersitzteil 100 im Bereich der Lagerlängsebene 104 zwei Öffnungsabschnitte 106 aufweist, in denen jeweils der erste Mutterlagersitzteil 100 sich zum zweiten Gehäuseteil 40 hin radial öffnend ausgebildet ist. Die Öffnungsabschnitte 106 des ersten Mutterlagersitzteils 100 sind an Schnittpunkten 108 des ersten Mutterlagersitzteils 100 mit der Lagerlängsebene 104 angeordnet. Damit sind die Öffnungsabschnitte 106 in einem Bereich des Gehäuses 32 angeordnet, dass eine verhältnismäßig große Materialstärke aufweist. Im Hinblick auf den beschriebenen Crashfall wird das Gehäuse 32 daher allenfalls in unrelevantem Maße durch die Öffnungsabschnitte 106 geschwächt.

Der erste Mutterlagersitzteil 100 ist in den Öffnungsabschnitten 106 sich derart zu dem zweiten Gehäuseteil 40 hin radial öffnend ausgebildet, dass zwischen den Öffnungsabschnitten 106 und der Spindelebene 62 jeweils ein Öffnungswinkel 110 angeordnet ist. Die Öffnungswinkel 110 betragen jeweils bevorzugt 10° bis 30°, besonders bevorzugt ca. 20°.

Das Spindelgetriebe 14 kann zwei Spindelmutterlager 50 aufweisen, die jeweils in einem der Mutterlagersitze 48 um die Spindelachse 34 angeordnet sind. Die Fig. 7 u. 8 zeigen, dass jedes der Spindelmutterlager 50 zwei Keilabschnitte 112 aufweist. Jeder der Keilabschnitte 112 verläuft entlang einem der Öffnungsabschnitte 106. Dabei ist jeder der Keilabschnitte 112 angrenzend an den jeweiligen Öffnungsabschnitt 106 angeordnet. Diese Anordnung vereinfacht die Montage der Spindelmutterlager 50. Die beiden Keilabschnitte 112 desselben Spindelmutterlagers 50 sind bezüglich einer Umfangsrichtung des Spindelmutterlagers 50 einander entgegengesetzt angeordnet.

Jeder der Keilabschnitte 112 weist eine Anschlagfläche 114 auf, die angrenzend an einen Lageranschlag 116 des zweiten Gehäuseteils 40 angeordnet ist. Die Anschlagfläche 114 und der Lageranschlag 116 sind dabei im Wesentlichen parallel zu der Lagerlängsebene 104 angeordnet sein. Dabei können die Spindelmutterlager 50 in dem jeweiligen der Mutterlagersitze 48 in Umfangsrichtung Spiel aufweisen. Die Anschlagfläche 114 ist an einem ersten Keilende 118 des jeweiligen Keilabschnitts 112 angeordnet. Jeder der Keilabschnitte 112 weist ein dem ersten Keilende 118 gegenüberliegendes zweites Keilende 120 auf, das rampenförmig ausgebildet und tangential an eine Lagerbuchse 122 des entsprechenden Spindelmutterlagers 50 angeformt ist.

### Bezugszeichenliste

- 10: Baugruppe
- 12: Getriebehalter
- 14: Spindelgetriebe
- 16: U-förmiger Abschnitt
- 18: Schenkel
- 20: Querstück
- 22: Elastomerschale
- 24: Spindelmutter
- 26: Spindelmutterlängsachse
- 28: Schnecke
- 30: Schneckenlängsachse
- 32: Gehäuse
- 34: Spindelachse
- 36: Schneckenachse
- 38: erstes Gehäuseteil
- 40: zweites Gehäuseteil
- 42: Niet
- 44: Bohrung
- 46: Teilungsebene
- 48: Mutterlagersitz
- 50: Spindelmutterlager
- 52: Stirnwandung
- 54: Durchführungsabschnitt
- 56: Öffnung
- 58: Abstützabschnitt
- 60: Seitenwandung
- 62: Spindelebene
- 64: Schneckenlagersitz
- 66: Bodenwandung
- 68: erste Rippe
- 70: erstes Rippenende
- 72: erster Rippenwinkel
- 74: zweite Rippe
- 75: Außenseite
- 76: zweiter Rippenwinkel
- 78: zweites Ende
- 80: dritte Rippe
- 82: erstes Ende
- 84: Abstützwinkel
- 86: Gehäuseinnern
- 88: Gehäuseende
- 90: Gehäuseecke
- 92: Kantenwinkel
- 94: innenseitige Rippe
- 95: Innenseite
- 96: Aussparung
- 98: Symmetrieebene
- 100: erster Mutterlagersitzteil
- 102: zweiter Mutterlagersitzteil
- 104: Lagerlängsebene
- 106: Öffnungsabschnitt
- 108: Schnittpunkt
- 110: Öffnungswinkel
- 112: Keilabschnitt
- 114: Anschlagfläche
- 116: Lageranschlag
- 118: erstes Keilende
- 120: zweites Keilende
- 122: Lagerbuchse

## Patentansprüche

1. Gehäuse (32) für ein Spindelgetriebe (14), mit
• einer Spindelachse (34),
• zwei Mutterlagersitzen (48) zur Anordnung jeweils eines Spindelmutterlagers (50),
• zwei einander gegenüberliegenden und jeweils die Spindelachse (34) schneidenden Stirnwandungen (52),
• mindestens einer entlang der Spindelachse (34) ausgerichteten Seitenwandung (60), und
• einer windschief zu der Spindelachse (34) angeordneten Schneckenachse (36), wobei die Spindelachse (34) in einer parallel zu der Schneckenachse (36) angeordneten gedachten Spindelebene (62) angeordnet ist,
wobei
• jeder der Mutterlagersitze (48) jeweils einer der Stirnwandungen (52) zugeordnet ist, und
• jede der Stirnwandungen (52) einen Abstützabschnitt (58) zur Abstützung des Gehäuses (32) an einem Getriebehalter (12) aufweist,
**dadurch gekennzeichnet, dass**
die mindestens eine Seitenwandung (60) mindestens eine Rippe (68, 74, 80, 94) zur Versteifung des Gehäuses (32) aufweist.

2. Gehäuse nach Anspruch 1,
**dadurch gekennzeichnet, dass** mindestens eine außenseitige Rippe (68, 74, 80) der mindestens einen Rippe (68, 74, 80, 94), vorzugsweise ausschließlich, an einer Außenseite (75) der Seitenwandung (60) angeordnet ist.

3. Gehäuse nach Anspruch 2,
**dadurch gekennzeichnet, dass**,
die mindestens eine außenseitige Rippe (68, 74, 80) bezüglich der Spindelebene (62), vorzugsweise ausschließlich, seitens der Schneckenachse (36) angeordnet ist.

4. Gehäuse nach einem der Ansprüche 2 bis 3,
**dadurch gekennzeichnet, dass**
mindestens eine erste Rippe (68) der mindestens einen außenseitigen Rippe (68, 74, 80) von dem Abstützabschnitt (58) einer der Stirnwandungen (52) zu dem der gegenüberliegenden der Stirnwandungen (52) zugeordneten der Mutterlagersitze (48) orientiert ist.

5. Gehäuse nach einem der Ansprüche 2 bis 4,
**dadurch gekennzeichnet, dass** mindestens eine zweite Rippe (74) der mindestens einen außenseitigen Rippe (68, 74, 80) von der Schneckenachse (36) zu einem der Mutterlagersitze (48) hin orientiert ist.

6. Gehäuse nach einem der Ansprüche 2 bis 5,
**dadurch gekennzeichnet, dass**
eine dritte Rippe (80) der mindestens einen außenseitigen Rippe (68, 74, 80) die Schneckenachse (36) zumindest teilweise umgibt.

7. Gehäuse nach Anspruch 6,
**dadurch gekennzeichnet, dass**
die mindestens eine erste Rippe (68) tangential zu der dritten Rippe (80) angeordnet ist.

8. Gehäuse nach einem der vorhergehenden Ansprüche,
**dadurch gekennzeichnet, dass**
jede der Stirnwandungen (52) einen Durchführungsabschnitt (54) mit einer um die Spindelachse (34) angeordneten Öffnung (56) zur Durchführung einer Spindel aufweist, wobei der Abstützabschnitt (58) von dem Durchführungsabschnitt (54) verschieden ausgebildet ist und gegenüber dem Durchführungsabschnitt (54) um einen Abstützwinkel (84) zu einem Gehäuseinnern (86) des Gehäuses (32) geneigt ist.

9. Gehäuse nach einem der vorhergehenden Ansprüche,
**dadurch gekennzeichnet, dass**
das Gehäuse (32) ein bezüglich der Spindelebene (62) von dem Abstützabschnitt (58) abgewandtes Gehäuseende (88) mit äußeren Gehäuseecken (90) aufweist, wobei die Gehäuseecken (90) als Vorsprünge ausgebildet sind.

10. Gehäuse nach einem der vorhergehenden Ansprüche,
**dadurch gekennzeichnet, dass**
mindestens eine innenseitige Rippe (94) der mindestens einen Rippe (68, 74, 80, 94) einerseits an einer Innenseite (95) der mindestens einen Seitenwandung (60) und andererseits an einer Bodenwandung (66) des Gehäuses (32) angeordnet ist.

11. Gehäuse nach Anspruch 10,
**dadurch gekennzeichnet, dass**
das Gehäuse (32) zwischen der mindestens einen innenseitigen Rippe (94) und mindestens einem der Mutterlagersitze (48) eine Aussparung (96) aufweist.

12. Gehäuse nach dem Oberbegriff des Anspruchs 1 oder einem der vorhergehenden Ansprüche,
**dadurch gekennzeichnet, dass** das Gehäuse (32) derart, vorzugsweise entlang der Spindelachse (34), geteilt ausgebildet ist, dass das Gehäuse (32) ein separates erstes Gehäuseteil (38) und ein separates zweites Gehäuseteil (40) aufweist, wobei
• jeder der Mutterlagersitze (48) einen ersten Mutterlagersitzteil (100) aufweist, der in dem ersten Gehäuseteil (38) angeordnet ist,
• eine gedachte Lagerlängsebene (104) parallel zu der mindestens einen Seitenwandung (60) und durch die Spindelachse (34) verlaufend angeordnet ist, und
• der erste Mutterlagersitzteil (100) im Bereich der Lagerlängsebene (104) mindestens einen Öffnungsabschnitt (106) aufweist, in dem der erste Mutterlagersitzteil (100) sich zum zweiten Gehäuseteil (40) hin radial öffnend ausgebildet ist.

13. Spindelgetriebe (14) umfassend
• eine Spindelmutter (24) mit einer Spindelmutterlängsachse (26),
• eine Schnecke (28) mit einer Schneckenlängsachse (30), und
• einem Gehäuse (32) nach einem der vorhergehenden Ansprüche,
wobei
• die Spindelmutter (24) derart in dem Gehäuse (32) angeordnet ist, dass die Spindelmutterlängsachse (26) mit der Spindelachse (34) des Gehäuses (32) zusammenfällt, und
• die Schnecke (28) derart in dem Gehäuse (32) angeordnet ist, dass die Schneckenlängsachse (30) mit der Schneckenachse (36) des Gehäuses (32) zusammenfällt.

14. Spindelgetriebe (14), insbesondere nach Anspruch 13, mit einem Gehäuse (32) nach Anspruch 12, wobei das Spindelgetriebe (14) mindestens ein jeweils in einem der Mutterlagersitze (48) angeordnetes Spindelmutterlager (50) aufweist, wobei das mindestens eine Spindelmutterlager (50) mindestens einen entlang des mindestens einen Öffnungsabschnitts (106) verlaufenden Keilabschnitt (112) aufweist.

15. Spindelgetriebe nach Anspruch 14,
**dadurch gekennzeichnet, dass**
der mindestens eine Keilabschnitt (112) eine Anschlagfläche (114) aufweist, die angrenzend an einen Lageranschlag (116) des zweiten Gehäuseteils (40) angeordnet ist.
